# EUROPEAN PATENT SPECIFICATION

(11) **EP 2 066 488 B1**
(45) Date of publication and mention of the grant of the patent: **07.09.2011**
(21) Application number: 07825087.5
(22) Date of filing: 11.09.2007
(51) Int. Cl.: B29C 59/04, B65D 63/10

(54) **STRAP EMBOSSING SYSTEM**
STREIFENPRÄGESYSTEM
SYSTÈME PERMETTANT D'IMPRIMER DES COURROIES

(30) Priority: 12.09.2006 IT BO20060630
(43) Date of publication of application: 10.06.2009
(73) Proprietor: S.I.M.A. Societa' Industrie Meccaniche Affini A R.L., 40056 Crespellano (IT)
(72) Inventor: BOCCAFOGLI, Sergio, 40128 Bologna (IT)
(74) Representative: Jorio, Paolo
(86) International application number: PCT/IB2007/002605
(87) International publication number: WO 2008/032178

(56) References cited:
- GB-A- 632 709
- GB-A- 1 531 082

## Description

### TECHNICAL FIELD

The present invention relates to a system for embossing plastic straps according to claim 1, which, as is known, consists in engraving a diamond pattern on the strap.

### BACKGROUND ART

Strap embossing systems comprise two embossing rollers, between which the strap is fed to engrave it on both sides. As is known, the size of the engraving varies according to the size of the strap, so different diamond patterns require either a number of embossing systems (one for each pattern size) or changing the rollers. Obviously, purchasing a number of systems involves considerable cost, whereas the second solution involves stopping the system to change the rollers, with all the cost this entails. Document GB-A-1 531 082 discloses a system for embossing straps in accordance with the preamble of claim 1.

### DISCLOSURE OF INVENTION

It is an object of the present invention to provide a strap embossing system designed to eliminate the aforementioned drawbacks, i.e. which provides for fast pattern selection.

According to the present invention, there is provided a system for embossing straps, comprising a bottom embossing roller and a top embossing roller, and characterized in that each of said rollers comprises a number of adjacent rings on its lateral surface; each said ring having a respective pattern; and each ring on said bottom roller with a given pattern being positioned facing a ring on said top roller with the same pattern.

### BRIEF DESCRIPTION OF THE DRAWINGS

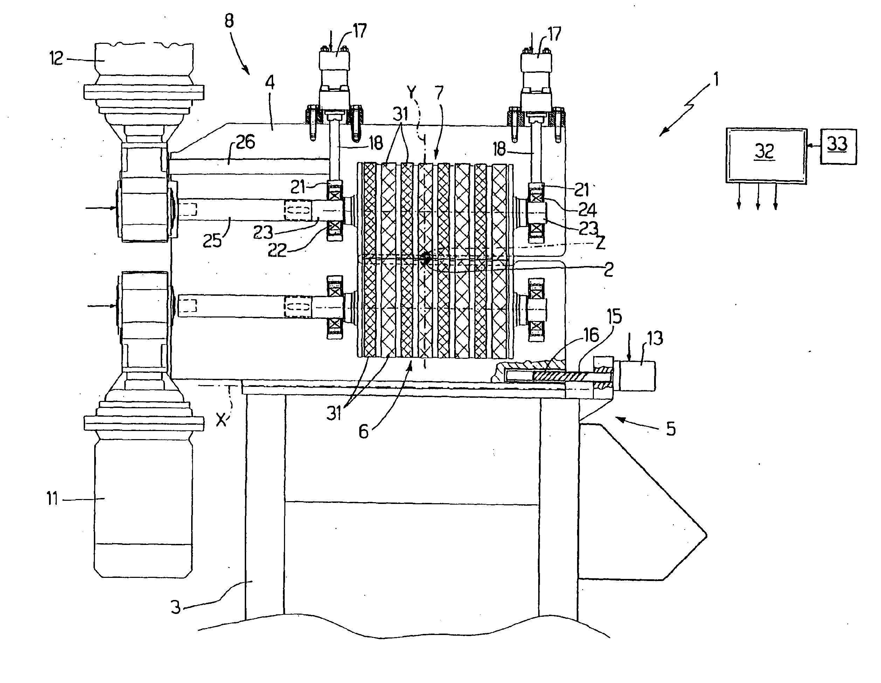

The present invention will be described with reference to the attached drawing, which shows a preferred embodiment of a system, indicated as a whole by 1, for embossing straps 2, and comprising:
a bed 3;
a vertical plate 4 supported on top of bed 3;
means 5 for adjusting the position of plate 4 with respect to bed 3 along a horizontal axis X;
a first embossing roller 6 fitted to plate 4 and having an axis of rotation parallel to axis X;
a second embossing roller 7 parallel to roller 6, at a higher level than roller 6, and also fitted to plate 4;
means 8 for adjusting the position of roller 7 along a vertical axis;
a first electric motor 11 for powering roller 6; and
a second electric motor 12 for powering roller 7.

### BEST MODE FOR CARRYING OUT THE INVENTION

System 1 has a vertical work axis Y perpendicular to axis X; and an axis Z perpendicular to axes X and Y, and along which strap 2 is fed between the two rollers 6 and 7 by known means not shown. Means 5 comprise an electric motor 13 fitted to bed 3 and having, on its drive shaft 15, a screw-nut screw coupling, the screw of which is defined by shaft 15, and the nut screw 16 of which is integral with plate 4. Needless to say, means 5 may have no motor 13, and adjustment may be made using a knob to turn a screw engaging nut screw 16.

Means 8 comprise two preferably hydraulic actuators 17 fitted to a top portion of plate 4, and each having a respective rod 18 fixed to a corresponding sleeve 21; a first sleeve 21 housing, by means of a bearing 22, a first axial end of the hub 23 of roller 7; and a second sleeve 21 housing, by means of a bearing 24, a second axial end of hub 23. The output shaft 25 of motor 12 is fitted to hub 23. To adjust the position of roller 7, motor 12 is also connected by a bracket 26 to an actuator 17. Alternatively or before adjusting the position of roller 7, shaft 25 is obviously disconnected from hub 23, or these may be connected by a joint allowing adjustment of the position of roller 7.

Each roller 6, 7 has a number of adjacent rings 31 on its lateral surface; each ring 31 having a respective pattern; and each ring 31 on roller 6 with a given pattern being positioned facing a ring 31 on roller 7 with the same pattern. System 1 comprises an electronic central control unit 32 for controlling means 5 and 8 and motors 11 and 12, and to which is connected a block 33 by which to select the pattern to be engraved on strap 2.

In actual use, to extract the strap 2 currently being worked, central control unit 32 commands upward translation of roller 7, which is performed by actuators 17 drawing roller 7 upwards. Once rollers 6 and 7 are parted, central control unit 32 commands means 5 to position plate 4 with respect to bed 3, i.e. to align with work axis Y the rings 31 on rollers 6 and 7 corresponding to the pattern selected by block 33. Once plate 4 and, hence, the selected rings 31 of rollers 6 and 7 are positioned, strip 2 is inserted between rollers 6 and 7 and along axis Z, roller 7 is restored to the work position, and strap 2 is embossed by means of motors 11 and 12. Obviously, roller 7 is positioned taking into account the thickness of strap 2.

The advantages of the present invention will be clear from the foregoing description.

In particular, a system is obtained which provides for changing the strap embossing pattern quickly and easily, with only a few minutes' downtime and, hence, with all the cost advantages this entails.

Clearly, changes may be made to system 1 as described and illustrated herein without, however, departing from the scope of the appended claims.

In particular, both plate 4 and roller 7 may be adjusted manually by the operator.

## Claims

1. A system for embossing straps (2), comprising a bottom embossing roller (6) and a top embossing roller (7), and **characterized in that** each of said rollers (6, 7) comprises a number of adjacent rings (31) on its lateral surface; each said ring (31) having a respective pattern; and each ring (31) on said bottom roller (6) with a given pattern being positioned facing a ring (31) on said top roller (7) with the same pattern.

2. A system as claimed in Claim 1, **characterized by** comprising first means (5) for adjusting said rollers (6, 7) with respect to a work axis (Y) to align respective predetermined rings (31) with said work axis (Y).

3. A system as claimed in Claim 1 and/or 2, **characterized by** comprising a bed (3), and a plate (4) fitted to said bed (3) and supporting said rollers (6, 7); said first means (5) adjusting the position of said plate (4) along a horizontal axis (X) perpendicular to said work axis (Y).

4. A system as claimed in Claim 3, **characterized in that** said first means (5) comprise a manually operated screw fitted to said bed (3) and engaging a nut screw (16) fitted to said plate (4).

5. A system as claimed in Claim 3, **characterized in that** said first means (5) comprise an electric motor (13) fitted to said bed (3) and having, on its output shaft (15), a screw-nut screw coupling, the screw of which is defined by said shaft (15), and the nut screw (16) of which is integral with said plate (4).

6. A system as claimed in Claim 5, **characterized by** comprising an electronic central control unit (32) for controlling said first means (5) and connected to a block (33) by which to select the pattern to be engraved on said strap (2) and, hence, said rings (31) to be aligned with said work axis (Y).

7. A system as claimed in any one of Claims 1 to 6, **characterized by** comprising second means (8) for adjusting the position of said top roller (7) parallel to itself.

8. A system as claimed in Claim 7, **characterized in that** said second means (8) comprise two preferably hydraulic actuators (17), each having a respective rod (18) fixed to a corresponding sleeve (21); a first sleeve (21) housing, by means of a bearing (22), a first axial end of the hub (23) of said top roller (7); and a second sleeve (21) housing, by means of a bearing (24), a second axial end of said hub (23).

## Patentansprüche

1. Ein System zum Prägen von Streifen (2), das eine untere Prägewalze (6) und eine obere Prägewalze (7) aufweist, und **dadurch gekennzeichnet ist, dass** jede der Walzen (6, 7) eine Anzahl von nebeneinander liegenden Ringen (31) auf ihrer seitlichen Oberfläche aufweist; jeder Ring (31) ein jeweiliges Muster hat; und jeder Ring (31) mit einem gegebenen Muster auf der unteren Walze (6) einem Ring (31) mit dem selben Muster auf der oberen Walze (7) zugewandt positioniert ist.

2. Ein System, wie in Anspruch 1 beansprucht, **dadurch gekennzeichnet, dass** es ein erstes Mittel (5) zum Einstellen der Walzen (6, 7) in Bezug auf eine Arbeitsachse (Y) aufweist, um die jeweiligen Vorbestimmten Ringe (31) mit der Arbeitsachse (Y) auszurichten.

3. Ein System, wie in Anspruch 1 und/oder 2 beansprucht, **dadurch gekennzeichnet, dass** es ein Bett (3) und eine Platte (4), die an dem Bett (3) angebracht ist und die Walzen (6, 7) lagert, aufweist; wobei das erste Mittel (5) die Position der Platte (4) entlang einer horizontalen Achse (X) senkrecht zu der Arbeitsachse (Y) einstellt.

4. Ein System, wie in Anspruch 3 beansprucht, **dadurch gekennzeichnet, dass** das erste Mittel (5) eine manuell betätigte Schraube, die an dem Bett (3) angebracht ist und mit einer an der Platte (4) angebrachten Schraubenmutter (16) im Eingriff ist, aufweist.

5. Ein System, wie in Anspruch 3 beansprucht, **dadurch gekennzeichnet, dass** das erste Mittel (5) einen Elektromotor (13) aufweist, der an dem Bett (3) angebracht ist und auf seiner Ausgangswelle (15) eine Schraubenmuttern-Schrauben-Kopplung hat, dessen Schraube durch die Welle (15) definiert ist und dessen Schraubenmutter (16) in die Platte (4) integriert ist.

6. Ein System, wie in Anspruch 5 beansprucht, **dadurch gekennzeichnet, dass** es eine elektronische Zentralsteuerungseinheit (32) zum Steuern des ersten Mittels (5) aufweist und die mit einem Block (33) verbunden ist, durch den das auf den Streifen (2) zu prägende Muster und daher die Ringe (31), die mit der Arbeitsachse (Y) auszurichten sind, auszuwählen sind.

7. Ein System, wie in einem der Ansprüche 1 bis 6 beansprucht, **dadurch gekennzeichnet, dass** es ein zweites Mittel (8) zum Einstellen der Position der oberen Walze (7) parallel zu sich selbst aufweist.

8. Ein System, wie in Anspruch 7 beansprucht, **dadurch gekennzeichnet, dass** das zweite Mittel (8) zwei bevorzugt hydraulische Aktuatoren (17) aufweist, von denen jeder eine jeweilige an einer zugehörigen Hülse (21) befestigte Stange (18) hat; eine erste Hülse (21) mittels eines Lagers (22) ein erstes axiales Ende der Nabe (23) der oberen Walze (7) unterbringt; und eine zweite Hülse (21) mittels eines Lagers (24) ein zweites axiales Ende der Nabe (23) unterbringt.

## Revendications

1. Système permettant d'imprimer des courroies (2), comprenant un rouleau d'impression inférieur (6) et un rouleau d'impression supérieur (7) et **caractérisé en ce que** chacun desdits rouleaux (6, 7) comprend un certain nombre d'anneaux adjacents (31) sur sa surface latérale ; chacun desdits anneaux (31) ayant un motif respectif ; et chaque anneau (31) sur ledit rouleau inférieur (6) avec un motif donné, étant positionné face à un anneau (31) sur ledit rouleau supérieur (7) ayant le même motif.

2. Système selon la revendication 1, **caractérisé en ce qu'**il comprend des premiers moyens (5) pour ajuster lesdits rouleaux (6, 7) relativement à un axe de travail (Y), afin d'aligner des anneaux prédéterminés respectifs (31) avec ledit axe de travail (Y).

3. Système selon la revendication 1 et/ou 2, **caractérisé en ce qu'**il comprend un lit (3), et une plaque (4) adaptée audit lit (3), et supportant lesdits rouleaux (6, 7), lesdits premiers moyens (5) ajustant la position de ladite plaque (4) le long d'un axe horizontal (X) perpendiculaire audit axe de travail (Y).

4. Système selon la revendication 3, **caractérisé en ce que** lesdits premiers moyens (5) comprennent une vis actionnée manuellement et fixée audit lit (3) et mettant en prise une vis à écrou (16) fixée à ladite plaque (4).

5. Système selon la revendication 3, **caractérisé en ce que** lesdits premiers moyens (5) comprennent un moteur électrique (13) installé sur ledit lit (3) et ayant, sur son arbre de sortie (15), un couplage vis-vis d'écrou, dont la vis est définie par ledit arbre (15) et dont la vis d'écrou (16) est d'un seul tenant avec ladite plaque (4).

6. Système selon la revendication 5, **caractérisé en ce qu'**il comprend une unité de commande centrale électronique (32) pour commander lesdits premiers moyens (5) et connectée à un bloc (33) permettant de choisir le motif à graver sur ladite courroie (2) et donc, lesdits anneaux (31) à aligner avec ledit axe de travail (Y).

7. Système selon l'une quelconque des revendications 1 à 6, **caractérisé en ce qu'**il comprend de seconds moyens (8) pour ajuster la position dudit rouleau supérieur (7) parallèlement à lui-même.

8. Système selon la revendication 7, **caractérisé en ce que** lesdits seconds moyens (8) comprennent deux actionneurs hydrauliques de préférence (17), ayant chacun une tige respective (18) fixée à un manchon correspondant (21) ; un premier logement de manchon (21), au moyen d'un roulement (22), une première extrémité axiale du moyeu (23) dudit rouleau supérieur (7) ; et un second logement de manchon (21), au moyen d'un roulement (24), une seconde extrémité axiale dudit moyeu (23).
